# EUROPEAN PATENT APPLICATION

(11) **EP 2 827 259 A1**
(43) Date of publication of application: **21.01.2015**
(21) Application number: 13306014.5
(22) Date of filing: 16.07.2013
(51) Int. Cl.: G06F 17/30

(54) **Method for providing image data for a location**

(71) Applicant: ALCATEL LUCENT, 92100 Boulogne-Billancourt (FR)
(72) Inventor: Stocker, Klaus Erwin, 70435 Stuttgart (DE); Templ, Wolfgang, 70435 Stuttgart (DE); Kopp, Dieter, 70435 Stuttgart (DE)
(74) Representative: MERH-IP Matias Erny Reichl Hoffmann

(57) **Abstract**

A method for providing image data for a location is disclosed which comprises:
- receiving image data for a location from at least one mobile camera device via a wireless network;
- storing the received image data and associated location data in a database such that image data for a specific location can be retrieved;
- receiving a request from a user, wherein the request specifies a location; and
- providing the image data associated with the location

## Description

### Background

This document relates to a method and a system for providing near real-time image data for a given location or a given area, wherein the image data may comprise one or more viewing angle(s).

Webcams, observation cams and corresponding backend applications etc. can be used to observe roads, places etc. For a number of technical, economical and legislation reasons there are a limited number of observation cameras in the field. Usually, these cameras are restricted to fixed sites and they tend to be expensive to operate. Similar restrictions apply to street sensors which count vehicles and provide data regarding traffic density. Such fixed systems cannot cope with dynamic changes, such as alternative routing within a camera- or sensor-controlled traffic system due to construction works or accidents. As the fixed-site cameras and sensors tend to only observe main routes, any delays and overcrowding on an alternative route will not be detected. Further, fixed-site cameras and sensors usually cannot observe objects or watch scenes from different viewing angles and perspectives.

It is desirable to have more image information from every street and public place where vehicles or smartphones can go: close-up views, different perspectives, and even historic image information for a given location from minutes, hours, days, months or years in the past may be interesting.

Existing services for providing location-based image data, such as Google Street View, typically only provide image data that may be several years old and their viewing angle and perspective is fixed and cannot be changed. These existing services thus cannot be used for acquiring recent image data of a location, e.g. in order to examine the current traffic situation in a certain area.

There is thus a need to provide a method and devices for providing near real-time image data and associated information for a given location.

### Summary

According to an aspect, a method for providing image data for a location comprises receiving image data for a location from at least one mobile camera device via a wireless network, wherein the image data may have been taken on request or based on a schedule which may be defined depending on the location of the mobile camera device. The wireless network may comprise WLAN or a cellular communication network. Therein, the mobile camera device may be a smartphone or PDA device, or it may be a vehicle-mounted camera, such as a parking assistant system. The image data may comprise static image data and/or video image data. In addition to the image data, further data specifying the location where the image was taken and/or the location of objects depicted in the image may be received from the at least one mobile camera device. The received image data and associated location data are stored in a database such that image data for a specific location can be retrieved. The storing may further comprise organizing the image data such that image data for a specific time or with a specific content can be retrieved from the database. When a request from a user is received, wherein the request specifies a location and may further specify a viewing angle and/or a point in time, the image data associated with the location and possibly also the viewing angle and/or point in time is retrieved and provided. Therein, the image data may be provided directly to the user, or it may be provided to a selected service implemented e.g. as a cloud-based application which processes the image data and which then provides information to the user that has been extracted from the processed image data.

Thus, a user of the claimed method can request and obtain image data for a user-defined location, wherein the image data has been generated by a mobile camera device. With the use of image data from mobile camera devices, image data can be generated in near real-time if at least one mobile camera device passes the requested location. Furthermore, a large coverage of locations can be achieved. Combinations of image data taken from several devices may allow for viewing an object from several perspectives and/or at several time instants.

According to embodiments, an access restriction level may be set or determined for the image and location data. An access authorization of the user may be determined and compared to the access restriction level of the requested image data. The image data associated with the location may then be provided to the user only if the user's access authorization corresponds to an access restriction level of the requested image and location data. Thus, access to sensitive data can be restricted to authorized users, such that e.g. image data taken on private property can be restricted to users who are authorized to access the respective property, or access to image data showing detailed images of people can be restricted to comply with privacy regulations.

According to embodiments, the image data and associated location data may be generated at the at least one mobile camera device according to a predetermined schedule. Thus, a mobile camera device may e.g. record and transmit image data at predetermined time intervals, at predetermined points in time, at predetermined location intervals (e.g. a vehicle's camera may record an image every 100m during a journey) or at predetermined locations (e.g. at points of interest). Thus, images are generated at regular time or space intervals and the database is regularly populated with a large amount of image data for a large number of locations. For a user request specifying a particular location, it is thus likely that near real-time image data for the requested location is present in the database and can be provided directly to the user or to an application for further processing.

According to embodiments, the method may further comprise transmitting a capture signal from a server to the at least one mobile camera device, the signal comprising location data and a request for image data. If a user requests image data for a specific location, which may not be available within the database, or which does not meet requested characteristics like recency, resolution, zoom, angle, etc. the server can thus initiate the capture of such requested image data. For example, if a user requests near real-time data for a location, the image data stored in the database may be too old and the server may thus initiate the capture of near real-time image data for the requested location. The capture signal may be received at the at least one mobile camera device, and, if the device's location corresponds to the received location data, an image of the location may be taken and image data corresponding to the image may be sent to the server. Thus, the user can receive near real-time image data for the requested location, having the requested characteristics.

Therein, the server may broadcast the capture signal to mobile camera devices which are in the vicinity of the requested location or even to all mobile camera devices, independently of whether they are near the requested location or not. Upon receipt of a capture signal, a mobile device may capture an image of the requested location and transmit the image data to the server. Such a broadcast ensures that all mobile camera devices which are likely to pass the requested location in the near future receive the capture signal and provide the requested image data. Therein, devices may need to first register with the server and a device's user may need to authorize the capturing and transmission of images from his/her device to the server.

Further, the server may transmit the capture signal via a cellular wireless communication network. In this case, the vicinity of the requested location may be defined by a predetermined number of cells surrounding the cell which contains the requested location. Thus, the server can use the existing infrastructure of the cellular wireless communication network and broadcast the capture signal to the mobile camera devices which are within the predetermined number of cells. Examples of cellular wireless communication networks are GSM, GPRS, UMTS (3G), EDGE, and LTE networks.

According to embodiments, the at least one mobile camera device may send its current location to the server. Then, the server may send the capture signal to a specific mobile camera device if the current location of this mobile camera device is within a predetermined distance of the requested location. Thus, the capture signal is sent only to selected devices and the overall traffic in the wireless communication network is reduced. The mobile device may send its location periodically (e.g. every minute) or upon request from the server.

According to embodiments, the capture signal may further comprise at least one of: a request for a specific image resolution, a request for static image data, a request for video image data, and a request for image data taken at specific times, at specific time intervals, in a specific direction, with a specific perspective, at a specific height, or with a specific zoom setting. Thus, a user may request specific image data, e.g. of a certain image resolution or a view in a specific direction from a requested location, at the server, and the server can then pass the user request on to the mobile camera devices in the capture signal.

According to embodiments, the method may further comprise receiving image data at the server in response to a capture signal transmitted by the server, e.g. via a wireless network. Then, image data received from multiple mobile camera devices in response to the capture signal may be compared and may further be ranked according to quality and/or relevance criteria. The received images may be presented to a user according to the ranking result, and a user selection may be implemented, wherein a user may define ranking criteria in order to identify the image data that is best suited to his/her purpose. Finally, it may be determined which received image data is to be stored in the image database according to at least one of: image content, image resolution, time stamp data, camera information data, camera direction data, camera perspective data, height data, and speed data of the mobile camera device. For example, duplicate images received for the same location with very close time stamps can be discarded. Further, the comparison of images of a given location may allow determining the direction and perspective of individual images, such that a complete panoramic view may be constructed from multiple images received for the same requested location by stitching together individual images taken from the same location but in different directions.

According to embodiments, processing the received image and location data may comprise at least one of:
- performing pattern matching on the received image data;
- changing the resolution of the received image data;
- extracting static image data from received video image data;
- combining image data received from more than one mobile camera device;
- combining image data for multiple locations; and
- generating a map representation from received image data.

Thus, various applications can be performed on the server which may provide different services based on the received image data. The above processing options are only examples and a variety of other processing functions may be applied.

According to embodiments, at least one of the following supplementary data may be received from the mobile camera device together with the image data and location data: time stamp data, camera information data, camera direction data, camera perspective data, temperature data, height data, and speed data of the mobile camera device. Such supplementary data may be used in organizing, ranking and in further processing of the image data.

According to a further aspect, a computer program product is provided, which, when executed by a processor of a computing device, will cause the computing device to execute the above-described method.

According to a further aspect, a server for providing image data for a location is provided, the server comprising a processor adapted to receive image data for a location from at least one mobile camera device. The image data may be received with or without a respective request having been sent to the at least one mobile camera device. Therein, the server may be a standalone device or it may be part of a cloud infrastructure. The server further comprises a storage device for storing the received image data and associated location data in a database such that image data for a specific location can be retrieved. The processor is further adapted to receive a request from a user, wherein the request specifies a location, to retrieve image data associated with the requested location from the database and to provide the image data associated with the location. The user request may further specify a viewing angle and/or a point in time.

The image data may be provided directly to the user, e.g. for display on a user device, or it may be provided to applications which may run on the server or which may be accessible to the server within a cloud infrastructure. Various different applications may be provided for processing the image data for the requested location in order to provide a variety of different services to a variety of different groups of users. In example embodiments, applications can use pattern matching algorithms in order to detect damages to road surfaces or road infrastructure in order to detect traffic conditions and present a map with a near real-time representation of road repair requirements or of traffic conditions within an area of interest to the user. Alternatively, pictures from an accident scenery taken from different perspectives may allow for an improved planning of rescue operations. Applications may further be adapted to address privacy concerns, wherein e.g. faces or vehicle number plates shown in images may be made unrecognizable in the image data before the image data is provided to a user.

According to embodiments, the server may further comprise a communication interface for communication with a cellular wireless communication network, wherein the communication interface is adapted to receive location information regarding cells of the wireless communication network and/or receive location information of mobile camera devices which are in communication within the wireless communication network. Thus, the server can send targeted capture signals to mobile camera devices within a specific area in order to obtain image data for requested locations.

According to a further aspect, a mobile device is provided, comprising a camera for capturing image data and a communication interface for receiving a capture signal from a server, wherein the capture signal comprises location information. The mobile device further comprises a processor adapted to compare location information of the received capture signal with a current location of the mobile device and to capture image data via the camera if the current location of the mobile device corresponds to the location information of the received capture signal. The mobile device's processor is further adapted to transmit the recorded image data to the server, wherein the current location of the mobile device may be added to the transmitted data. Thus, the mobile device can provide recent image data for a requested location upon receiving a capture signal from the server. The mobile device may further transmit supplementary data as set out above to the server.

Further, a method may be performed on a mobile device which includes a camera, wherein the method may comprise receiving a capture signal from a server, the capture signal comprising location information. Then, the location information of the received capture signal may be compared with a current location of the mobile device. Therein, the current location of the mobile device may be obtained from triangulation procedures using signals from several base stations of a wireless communication network, via a signal from a GPS sensor of the mobile device, or via other means. Further, the method may comprise capturing image data via the camera if the current location of the mobile device corresponds to the location information of the received capture signal. Therein, details about the image data, such as a viewing angle, direction, perspective or resolution may be specified in the received capture signal or may be determined according to settings stored in the mobile device. Finally, the captured image data of the requested location and optional additional information related to the image is transmitted to the server.

Thus, the method allows the use of an existing mobile device, which, after installation of the respective software application and registration with the server, can serve as a mobile camera device which supplies near real-time image data for a large number of locations to the server. Therein, camera settings, such as zoom setting, resolution video/static image capturing and the like may be controlled according to parameters defined in the capture signal or defined within the software application stored in the mobile device. In addition to the above-described request mode, wherein image data is supplied as response to a received capture signal, the method may also comprise a scheduled mode, wherein image data is captured according to a schedule stored in the mobile device. The captured image data is then transmitted to the server together with associated location data.

The present description is mainly directed at embodiments of a method. However, it is to be understood, that any features described in terms of method steps may also be implemented as device features and vice versa.

### Detailed Description

Various aspects are explained below in an exemplary manner with reference to the accompanying drawings, wherein:
Fig. 1 shows a schematic overview of an embodiment wherein a cloud server receives image data from a plurality of mobile camera devices and wherein different user groups request image data from the server;
Fig. 2 shows a schematic overview of mobile camera devices within a cellular network; and
Fig. 3 shows a schematic structure of an example mobile camera device according to an embodiment.

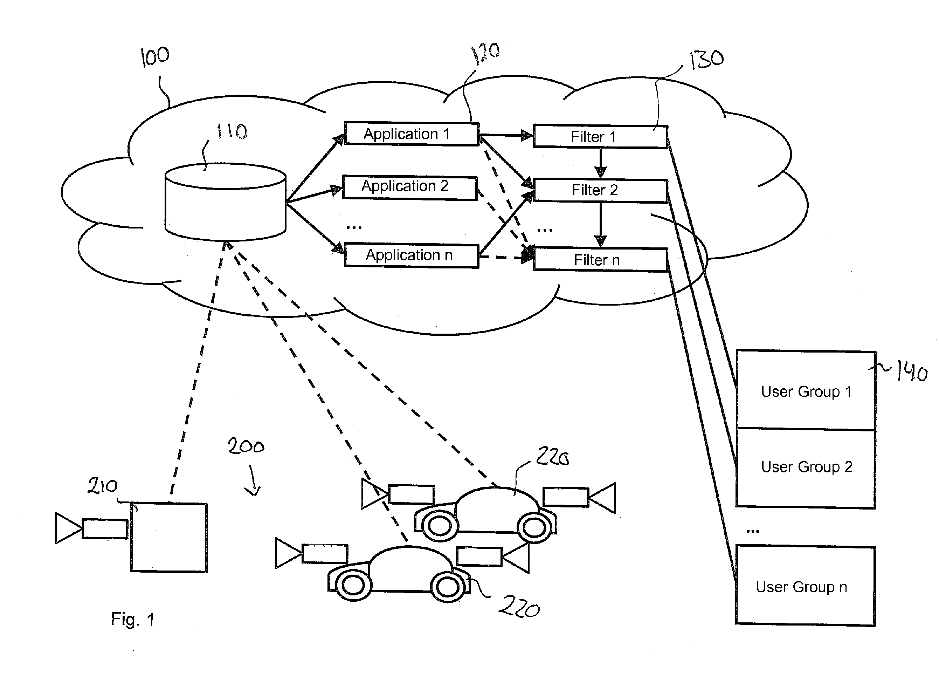

As shown in Fig. 1, a cloud-based server 100 is provided which has a database 110 for storing image data received from a plurality of mobile camera devices 200. The mobile camera devices 200 may comprise smartphones 210, tablet computers or PDA devices with an inbuilt camera or vehicles 220 with inbuilt cameras and having communication capabilities.

As indicated by the dotted lines in Fig. 1, the mobile camera devices 200 send image data to the cloud-based server 100 via a wireless communication network, wherein the image data may comprise static image data and/or video image data, and wherein associated location data and optionally supplementary data is sent together with the image data.

Images taken by vehicles 220 in stationary or in moving mode or taken by smartphones 210 can be gathered through mobile communication services on the cloud server 100 together with further information like time stamp, GPS location data, speed, height, camera information, temperature, etc. Furthermore, any kind of sensor information can be provided by sensors of the vehicle 220 or the smartphone 210 and can be added to the image data.

The cloud server 100 then stores the received data in the database 110 for further processing in order to create near real-time services for a wide range of users: private, municipalities, state, industry, police, fire brigade, rescue, etc.. Therein, the received image data may be ordered, ranked, pre-processed and indexed such that image data for a specific location and/or a specific time can be efficiently retrieved. The server 100 does not necessarily have to be a cloud-based server; however, a cloud-based system has the advantage of high scalability and availability.

A number of different applications 120 may be provided for an optional processing of the image data. Each application may perform a different type of image processing, such that a large variety of services can be offered to different users 140. Therein, not every user group 140 may be authorized to use every service provided by an application 120. Hence, access filters 130 are provided which ensure that only authorized user groups access the respective applications 120. Thus, unauthorized access to potentially sensitive image data can be prevented. For example, a first user group such as police and rescue services may be provided with unlimited or near unlimited access to image data. Another user group such as the general public may be restricted from accessing any image data directly and may only be provided with processed data which does not contain any images of people, vehicle number plates or other potentially sensitive content. Filters 130 may further restrict access to a certain application 120 to users who have paid for the corresponding service.

An example application 120 may provide identification of free parking space and near real-time streets views for a given area. Therein, image data may be analyzed and image data from a number of locations within an area may be combined and analyzed in order to create a map view that identifies free parking spaces, e.g. with suitable symbols or with a suitable color code of the mapped area.

Further, an example application 120 may combine image data showing the same location from different directions, and/or combine image data from several locations in order to provide a virtual walk around for any kind of planning or observation.

An example application 120 may use a pattern matching algorithm for identification of holes in the road surface, damaged street lights, traffic lights, traffic signs etc. and may combine image and location data from several locations in order to generate a map view of road damages, which may then be used for planning roadworks or for generating road repair schedules.

A further example application may be used to document lightning, storm, water or other natural events that cause damage to buildings and structures. As image data can be gathered at near real-time, the progress and severity of such natural events and disasters can be observed in detail, which may e.g. be used for generating more accurate predictions of future events. Further, insurance companies could check insurance claims due to lightning or storm damages by accessing the recorded image data from the respective time and location the damage was supposed to have occurred.

Special applications 120, which may only be accessible to police, fire brigade and rescue services, may use pattern matching and image processing algorithms to search the image data stored in the database for cars, persons and any kind of device that can be identified through picture or video. Further, sound data may be available for at least some video image data, in which case sound pattern matching could further be used within such a person or vehicle searching application. As described above, the access to such special applications 120 may be controlled by appropriate filters 130.

Further applications 120 may be used for documentation of accidents or fires using the image data supplied for a requested location during a specified time span. Since the supplied image data is near real-time, image data may further be used for co-ordination of disaster operations during an accident or a fire.

An example of an application 120 which may be available to the general public without any access restrictions is a real-time weather information service (sun, fog, hail, rain, ice, clouds, lightning, storm, ...) for an arbitrary location. Further applications 120 could provide statistical evaluations of information contained in image data for a given location and different points in time, such as (almost) real-time information on traffic conditions, traffic jams, etc.. Providing statistical evaluations rather than the actual image data for a location has the advantage that privacy protection of the image data can be ensured. Thus, a user can be supplied with the requested information about the location without also receiving potentially privacy-protected image data of people, vehicle number plates or the like which may be shown in the original image data.

In general, the problem of access to potentially sensitive data and privacy protection may be addressed by classifying the application services 120 into groups. For a high-end service group, which may offer services that are important to security issues, access may be restricted to a small user group that has legal authority and permission. For example, in an emergency case, the police or rescue service could request the complete unfiltered or even raw data of a certain location at any point in time, i.e. from a near real-time image to an image taken minutes, hours, days, months or years in the past. Access rights are set corresponding to the legal authorization of the user group, such that police and authorities, which are legally authorized to view almost any image data even if contains depictions of faces, vehicle number plates or the like, will be provided with near-unlimited access to the image data. Other user groups, such as the general public, may only be provided with filtered or processed image data such that privacy legislation regarding images of people, locations and situations is observed.

For a medium service group, application services may offer some premium paid services that create high economical value for companies and authorities. Therein, access to image data is controlled by paid subscriptions and the like, wherein suitable image processing (such as e.g. making faces and vehicle number plates unrecognizable) can be performed in order to ensure compliance with privacy protection regulations.

A further low-end service group may be provided, which may be used to motivate mobile device users to register their mobile camera devices with the near real-time cloud service. This class of service may be restricted and fully privacy filtered in order to keep full privacy of individuals. It could be used by users for the purpose of planning any kind of activity like shopping, sports, recreation, etc. A private person could take a virtual walk around to see weather conditions, whether a place, street is crowded or not etc.

The mobile camera devices 200 shown in Fig. 1 may operate in two different modes:

### A) Scheduled mode

In scheduled mode, the mobile device 200 records and transmits image data at regular time intervals or at predefined points in time according to a predetermined schedule. Further, the schedule may be based on position rather than on time, such that, during a journey, the mobile device 200 records and transmits image data in predetermined space intervals (e.g. every 100m) or at predetermined points in space (e.g. at every crossroads, or at specific points of interest). Such a default schedule could be set in the mobile device 200 or it could be received via the wireless communication network when the mobile device 200 initially registers with the server 100.

The schedule may also be determined by the server 100 and transmitted to the mobile camera device 200 via the wireless network. After receiving the schedule, the mobile camera device 200 may capture images and transmit image data and corresponding location and possibly supplementary information to the server without the need for further instructions from the server. The server 100 may change and update the schedule of all or some mobile devices 200 according to the needs of the various image processing services performed by applications 120, according to the amount of data traffic in the wireless communication network or according to the amount and the age of image data stored in the database 110.

### B) User request mode

In user request mode, a user requests image data for a specific location at the server 100. Such a user request may also define the resolution of the image data, the frame rate of video image data, or any other properties of the image data such as direction of the camera, image content, image to be taken at an exact point in time, etc..

The server 100 receives and processes this request and transmits a corresponding capture signal to selected mobile camera devices 200. The capture signal may comprise the requested location and any further data that specifies the user request, such as a requested time, image resolution and the like. A mobile camera device 200 which receives a capture signal compares its current location with the requested location in the capture signal and records image data if the mobile device's current location matches the requested location. Further, the mobile device 200 may process other elements of the capture signal in order to ensure that the recorded image data has the requested resolution, is taken at the requested moment in time, etc.. Based on the received information in the capture signal, the mobile device 200 may set image capture and recording parameters, e.g. of the camera, according to the received requirements.

Instead of sending a capture signal to all mobile camera devices 200, the server 100 could use location information received from the mobile camera devices 200, e.g. the location information received in conjunction with image data recorded in scheduled mode as described above, in order to identify which mobile camera devices 200 are likely to be in the vicinity of the requested location. Location information may also be provided by the mobile devices 200 to the server at regular time intervals. The capture signal may then be sent only to the mobile devices 200 in the vicinity of the requested location, such that overall signal traffic can be kept to a minimum.

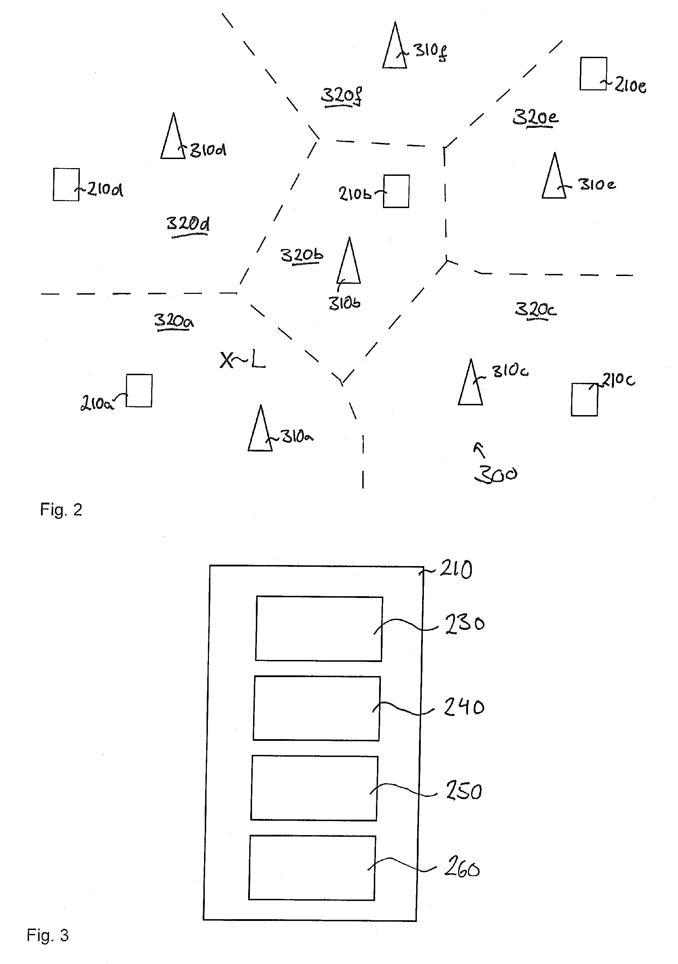

If the mobile devices 200 are mobile communication devices 210 such as smartphones, tablet computers or the like which communicate via a cellular wireless communication network 300 as shown in Fig. 2, then approximate location information of the mobile communication devices 210 is typically already known within the wireless communication network 300, as each mobile communication device 210 is associated with a particular base station 310 of the wireless communication network 300. Each base station 310 serves mobile communication devices 210 in a cell 320 which typically covers the area surrounding the base station 310. Further, the wireless communication network 300 may perform triangulation methods in order to accurately determine the location of each mobile device 210. Thus, the server 100 need not keep track of the location for each mobile communication device but may receive location data of the mobile devices 210 from the wireless communication network 300.

In embodiments, for a requested location L which lies within a particular cell 320a of the wireless communication network 300, the server 100 can request that the capture signal be broadcast to those base stations 310a, 310b, 310c, 310d which are associated with cells 320a, 320b, 320c, 320d that lie in the vicinity of the requested location L. A mobile communication device 210a, 210b, 210c, 210d that is currently located in one of these cells and is served by the associated base station 310a, 310b, 310c, 310d will thus receive the capture signal.

Base stations 310e, 310f which are not located in the vicinity of the requested location L will not broadcast the capture signal. Hence, a mobile communication device 210e which is not in the vicinity of the requested location will not receive the capture signal. Thus, the capture signal will be transmitted to the mobile communication devices 210a, 210b, 210c, 210d within the vicinity of the requested location L without the need for the server 100 to identify current locations of mobile communication devices 210. Further, mobile communication devices 210e which are not in the vicinity of the requested location do not receive the capture signal, thus avoiding the use of unnecessary processing and power resources for receiving and storing capture signals that are irrelevant to a particular mobile communication device 210e.

Applications 120 can employ a mixture of image data obtained by the scheduled and user-requested operation modes. The scheduled mode may e.g. be used for providing fairly low-resolution image data, and a user can then choose to request higher-resolution image data in order to obtain more information about a specific location. Thus, regular data traffic can be kept low by transmitting low data volumes in scheduled operation mode, while high data volumes are only generated and transmitted upon specific request by a user.

Fig. 3 shows a schematic drawing of an example mobile communication device 210 which comprises a camera 230 for capturing image data. The camera 230 may be adapted for capturing static image data and/or video image data, and the resolution of captured image data may be adjustable between a minimum and a maximum value which are determined by the camera's technical specifications. Further, a focal distance and/or a zoom setting of the camera 230 may be adjustable and controlled as described above.

The mobile device 210 further comprises a communication interface 240 for receiving a capture signal from a server 100 (see Fig. 1), wherein the capture signal comprises location information. The mobile device 210 further comprises a processor 250 for processing the received capture signal and for controlling the operation of the other device components.

In embodiments, sensors 260 may be provided, such as e.g. a GPS receiver for identifying a current location of the mobile device 210, or temperature or acceleration sensors for determining supplementary data that can be stored together with image data captured by the camera 230.

As described above, the mobile device 210 may operate in a scheduled mode, wherein the processor 250 controls the recording of image data according to a predetermined schedule. The image data is associated with location data, which may be obtained from the mobile device's GPS receiver 260 or may be obtained by triangulation using the known locations of the nearest base stations 310 of the wireless communication network 300. Further data obtained by the sensors 260, such as temperature data or data regarding height, orientation or speed of the mobile device 210 may be associated with the image data. The image data and its associated information are then sent to the cloud-based server 100 via the mobile device's communication interface 240.

If a capture signal is received at the communication interface 240 of the mobile device 210, the processor may compare location information of the received capture signal with the current location of the mobile device 210. As described above in conjunction with the user-request mode, image data may then be recorded and sent to the cloud-based server 100 if the current location of the mobile device 210 corresponds to the location information of the received capture signal. In addition to the image data, supplementary data may be sent to the server if requested.

Both in scheduled and in user request mode, the user of the mobile device 210 may be able to override any requests for capturing image data, such that the mobile device user remains in control of the operation of his/her device and can prevent the recording of image data in certain locations, during certain time or during certain states of the mobile device 210, such as e.g. during a low battery state, during a telephone conversation or while the mobile device 210 is located on private property.

The various embodiments of the present method and device enable the near real-time generation and provision of image data for a given location, using existing mobile camera devices and existing communication infrastructures. Thus, various types of location-based services, such as e.g. traffic prediction, detection of road damage, or a virtual walk around, can be provided to a user without the need for installing and maintaining a large number of purpose-built camera devices. Instead, a crowd sourcing concept is used such that a large number of mobile camera devices may be available for recording image data of a large number of locations in near real-time.

It should be noted that the description and drawings merely illustrate the principles of the proposed methods and devices. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for providing image data for a location, comprising:
- receiving image data for a location from at least one mobile camera device via a wireless network;
- storing the received image data and associated location data in a database such that image data for a specific location can be retrieved;
- receiving a request from a user, wherein the request specifies a location; and
- providing the image data associated with the location.

2. Method according to claim 1, further comprising:
- determining an access restriction level for the image and location data;
- determining an access authorization of the user; and
- providing the image data associated with the location to the user only if the user's access authorization corresponds to an access restriction level of the image and location data.

3. Method according to any one of claims 1 or 2, wherein the image data and associated location data are generated at the at least one mobile camera device according to a predetermined schedule.

4. Method according to any one of claims 1 to 3, further comprising:
- transmitting a capture signal from a server to the at least one mobile camera device, the signal comprising location data and a request for image data;
- at the at least one mobile camera device, receiving the capture signal, and, if the device's location corresponds to the received location data, taking an image of the location and sending image data corresponding to the image to the server.

5. Method according to claim 4, wherein the server broadcasts the capture signal to mobile camera devices which are in the vicinity of the requested location.

6. Method according to claim 5, wherein the server transmits the capture signal via a cellular wireless communication network, and wherein the vicinity of the requested location is defined by the cells corresponding to the requested location.

7. Method according to claim 4 or 5, wherein the at least one mobile camera device sends its current location to the server, and wherein the server sends the capture signal to a mobile camera device if the current location of the mobile camera device is within a predetermined distance of the requested location.

8. Method according to any one of claims 4 to 7, wherein the capture signal further comprises at least one of: a request for a specific image resolution, a request for static image data, a request for video image data, and a request for image data taken at specific times, at specific time intervals, in a specific direction, with a specific perspective, at a specific height, or with a specific zoom setting.

9. Method according to any one of claims 4 to 8, further comprising:
- receiving image data at the server in response to a capture signal transmitted by the server;
- comparing image data received from multiple mobile camera devices in response to the capture signal; and
- determining which received image data is to be stored in the image database according to at least one of: image content, image resolution, time stamp data, camera information data, camera direction data, camera perspective data, height data, and speed data of the mobile camera device.

10. Method according to any one of claims 1 to 9, wherein processing the received image and location data comprises at least one of:
- performing pattern matching on the received image data;
- changing the resolution of the received image data;
- extracting static image data from received video image data;
- combining image data received from more than one mobile camera device;
- combining image data for multiple locations; and
- generating a map representation from received image data.

11. Method according to any one of claims 1 to 9, wherein at least one of the following supplementary data is received from the mobile camera device together with the image data and location data: time stamp data, camera information data, camera direction data, camera perspective data, temperature data, height data, and speed data of the mobile camera device.

12. Computer program product, which, when executed by a processor of a computing device, will cause the computing device to execute the method of claim 1.

13. Server for providing image data for a location, comprising:
- a processor adapted to receive image data for a location from at least one mobile camera device; and
- a storage device for storing the received image data and associated location data in a database such that image data for a specific location can be retrieved; and
- wherein the processor is further adapted to receive a request from a user, wherein the request specifies a location, to retrieve image data associated with the requested location from the database, and to provide the image data associated with the location.

14. Server according to claim 13, further comprising a communication interface for communication with a cellular wireless communication network, wherein the communication interface is adapted to receive location information regarding cells of the wireless communication network and/or receive location information of mobile camera devices which are in communication within the wireless communication network.

15. A mobile device, comprising a camera for capturing image data and a communication interface for receiving a capture signal from a server, wherein the capture signal comprises location information, and further comprising a processor adapted to:
- compare location information of the received capture signal with a current location of the mobile device;
- capture image data via the camera if the current location of the mobile device corresponds to the location information of the received capture signal; and
- transmit the captured image data to the server.

## Amended claims

### Amended claims in accordance with Rule 137(2) EPC.

1. Method for providing image data for a location, comprising
- transmitting a capture signal from a server to at least two mobile camera devices, the signal comprising location data and a request for image data;
- receiving image data for a location specified by the location data from at least two mobile camera devices via a wireless network;
- comparing image data received from multiple mobile camera devices in response to the capture signal;
- determining which received image data is to be stored in an image database according to at least one of: image content, image resolution, time stamp data, camera information data, camera direction data, camera perspective data, height data, and speed data of the mobile camera device;
- storing the received image data and associated location data in the image database such that image data for a specific location can be retrieved;
- receiving a request from a user, wherein the request specifies a location; and
- providing the image data associated with the requested location.

2. Method according to claim 1, further comprising:
- determining an access restriction level for the image and location data;
- determining an access authorization of the user; and
- providing the image data associated with the location to the user only if the user's access authorization corresponds to an access restriction level of the image and location data.

3. Method according to any one of claims 1 or 2, wherein the image data and associated location data are generated at the at least one mobile camera device according to a predetermined schedule.

4. Method according to any one of claims 1 to 3, further comprising:
- at the at least one mobile camera device, receiving the capture signal, and, if the device's location corresponds to the received location data, taking an image of the location and sending image data corresponding to the image to the server.

5. Method according to claim 4, wherein the server broadcasts the capture signal to mobile camera devices which are in the vicinity of the requested location.

6. Method according to claim 5, wherein the server transmits the capture signal via a cellular wireless communication network, and wherein the vicinity of the requested location is defined by the cells corresponding to the requested location.

7. Method according to claim 4 or 5, wherein the at least one mobile camera device sends its current location to the server, and wherein the server sends the capture signal to a mobile camera device if the current location of the mobile camera device is within a predetermined distance of the requested location.

8. Method according to any one of claims 4 to 7, wherein the capture signal further comprises at least one of: a request for a specific image resolution, a request for static image data, a request for video image data, and a request for image data taken at specific times, at specific time intervals, in a specific direction, with a specific perspective, at a specific height, or with a specific zoom setting.

9. Method according to any one of claims 1 to 8, wherein processing the received image and location data comprises at least one of:
- performing pattern matching on the received image data;
- changing the resolution of the received image data;
- extracting static image data from received video image data;
- combining image data received from more than one mobile camera device;
- combining image data for multiple locations; and
- generating a map representation from received image data.

10. Method according to any one of claims 1 to 8, wherein at least one of the following supplementary data is received from the mobile camera device together with the image data and location data: time stamp data, camera information data, camera direction data, camera perspective data, temperature data, height data, and speed data of the mobile camera device.

11. Computer program product, which, when executed by a processor of a computing device, will cause the computing device to execute the method of claim 1.

12. Server for providing image data for a location, comprising:
- a processor adapted to:
- transmit a capture signal to at least two mobile camera devices, the signal comprising location data and a request for image data; and
- receive image data for a location specified by the location data from at least two mobile camera devices via a wireless network;
- compare image data received from multiple mobile camera devices in response to the capture signal; and
- determine which received image data is to be stored in an image database according to at least one of: image content, image resolution, time stamp data, camera information data, camera direction data, camera perspective data, height data, and speed data of the mobile camera device; and
- a storage device for storing the image database comprising received image data and associated location data such that image data for a specific location can be retrieved; and
- wherein the processor is further adapted to receive a request from a user, wherein the request specifies a location, to retrieve image data associated with the requested location from the database, and to provide the image data associated with the requested location.

13. Server according to claim 12, further comprising a communication interface for communication with a cellular wireless communication network, wherein the communication interface is adapted to receive location information regarding cells of the wireless communication network and/or receive location information of mobile camera devices which are in communication within the wireless communication network.

14. A mobile device, comprising a camera for capturing image data and a communication interface for receiving a capture signal from a server, wherein the capture signal comprises location data, and further comprising a processor adapted to:
- compare the location data of the received capture signal with a current location of the mobile device;
- capture image data via the camera if the current location of the mobile device corresponds to the location data of the received capture signal;
- determine further information related to at least one of: image resolution, time stamp data, camera information data, camera direction data, camera perspective data, height data, and speed data of the mobile device; and
- transmit the captured image data and the further information to the server.
